# EUROPEAN PATENT SPECIFICATION

(11) **EP 1 469 034 B1**
(45) Date of publication and mention of the grant of the patent: **01.03.2006**
(21) Application number: 03425212.2
(22) Date of filing: 04.04.2003
(51) Int. Cl.: C08K 5/49, C08K 3/32, C08K 3/26

(54) **Polimeric nanocomposite material flame retarded, process for preparation and use thereof**
Flammgeschütztes, polymeres Nano-Verbundstoff-Material, Verfahren zu seiner Herstellung und dessen Verwendung
Matériau nanocomposite polymère rétardateur à la flamme, procédé de préparation et utilisation

(43) Date of publication of application: 20.10.2004
(73) Proprietor: VEM S.P.A., 40033 Casalecchio di Reno (Bologna) (IT)
(72) Inventor: Zammarano, Mauro, 72021 Francavilla Fontana (BR) (IT); Mantovani, Frederica, 34128 Trieste (IT); Franceschi, Massimiliano, 34127 Trieste (IT)
(74) Representative: Tansini, Elio Fabrizio

(56) References cited:
- WO-A-99/35186
- DATABASE WPI Section Ch, Week 198724 Derwent Publications Ltd., London, GB; Class A17, AN 1987-168115 XP002252951 & JP 62 101644 A (SUMITOMO BAKELITE CO), 12 May 1987 (1987-05-12)

## Description

The present invention relates to a halogen-free flame-retarded nanocomposite material with good flame-retardant properties, to the process for preparing it and to the use thereof.

The wide spreading of polymeric materials has strongly increased fire dangers. In order to obviate said problems, polymeric materials containing flame retarders are used today.

It is known about several classes of flame retarders.

A first class comprises halogenated flame retarders, which can stop the radical mechanism at its start during combustion processes. However, halogenated flame retarders generate opaque vapors, toxic and corrosive gases.

A second class of flame retarders comprises inorganic hydroxides. A polymeric material containing inorganic hydroxides as flame retarders has a drawback due to the fact that in order to obtain a material with a good flame resistance it is necessary to use a concentration of inorganic hydroxides above 50% by weight on the total weight of the polymeric material. For instance, 70% by weight of aluminum hydroxide is used in ethylene vinyl acetate in order to obtain a material classifiable as V0 according to UL94 standard.

However, so high a concentration of inorganic hydroxides is disadvantageous since it increases the weight of the materials and promotes a strong decay of the mechanical properties of said material.

A third class of flame retarders comprises organic and inorganic phosphoric compounds. Phosphor is often used as elementary phosphor, inorganic or organic phosphoric compounds.

However, polymeric materials containing phosphoric compounds as flame retarders have a drawback due to their potential toxicity for man and environment should the polymeric material undergo combustion.

The potential toxicity deriving from the use of phosphoric compounds as flame retarders in a polymeric material mainly concerns:
a) the direct toxicity of organophosphoric flame retarders should the latter be released by materials;
b) the direct toxicity of organophosphoric compounds and of inorganic phosphoric compounds generated in the vapor phase during the combustion of the polymeric material.

Moreover, flame retarders comprising phosphoric compounds have a further drawback due to the fact that organophosphoric compounds are often neurotoxic agents, whose effects have acute and chronic stages.

The main acute effect of some organophosphoric compounds is the anti-cholinesterase effect, which inhibits the action of cholinesterase and therefore increases the effects of acetylcholine. In some patients this effect can cause paralysis and, in extreme cases, death.

Therefore, there is the need for a polymeric material with flame-retardant properties, which is not toxic for man and environment.

In particular, there is the need for a polymeric material having a low content by weight of flame retarders, with flame-retardant properties and with good mechanical properties.

Among polymeric materials it is known about a special class comprising nanocomposite polymeric materials.

Patent application WO99/35186 describes a method for preparing a nanocomposite polymeric material comprising a polymeric matrix into which a clay is incorporated.

In document WO99/35186 a lamellar double hydroxide is incorporated into a polymeric material. Said lamellar double hydroxides are scarce in nature but several synthetic products are available, which can be modified with organic anions so as to obtain a lipophilic surface. The use of said modified clays in a polymeric matrix allows to obtain a homogenous dispersion on a nanometric level of said clays within the polymeric matrix. The nanocomposite polymeric materials described in document WO 99/35186 are heat-resistant.

However, nanocomposite polymeric materials as described in the prior art do not have flame-retardant properties.

Furthermore, nanocomposite polymeric materials as described in the prior art do not containing flame retarders.

Therefore, there is still the need for a polymeric material with flame-retardant properties, mechanical properties and with a low content of flame retarder.

An aim of the present invention is to provide a polymeric material with flame-retardant properties, which is not toxic for man and environment.

Another aim of the present invention is to provide a polymeric material with flame-retardant properties and with good mechanical properties.

A further aim of the present invention is to provide a polymeric material with flame-retardant properties having a low content by weight of flame retarders.

A further aim of the present invention is to provide a polymeric material with flame-retardant properties having a low content by weight of phosphoric compounds as flame retarders.

These aims and others that shall be evident in the course of the following detailed description have been achieved by the Applicant, who has surprisingly found out that a nanocomposite polymeric material comprising a polymeric matrix and hydrotalcite has unexpected flame-retardant properties.

Moreover, the Applicant has found out that the addition of phosphoric compounds to a polymeric material comprising hydrotalcite allows to obtain a synergic system hydrotalcite-phosphoric compounds enabling to reduce the amount of phosphoric compounds used in a polymeric material. Therefore, the addition of phosphoric compounds to a nanocomposite polymeric material comprising a polymeric matrix allows to obtain a polymeric material with improved flame-retardant properties having a low content of phosphoric compounds.

A first object of the present invention is the use of a nanocomposite polymeric material comprising a polymeric matrix and hydrotalcite, whose characteristics are listed in the appended independent claim.

Another object of the present invention is a nanocomposite polymeric material comprising a polymeric matrix, hydrotalcite and phosphoric compounds, whose characteristics are listed in the appended independent claim.

A further aim of the present invention is a process for preparing a nanocomposite polymeric material comprising a polymeric matrix, hydrotalcite and phosphoric compounds, whose characteristics are listed in the appended independent claim.

Eventually, another object of the present invention is the use of a nanocomposite polymeric material comprising a polymeric matrix, hydrotalcite and phosphoric compounds, whose characteristics are listed in the appended independent claim.

The use of hydrotalcites allows to associate the flame-retardant properties that are typical of inorganic hydroxides (endothermic decomposition and dilution of pyrolysis gases) with properties that are typical of nanocomposites (low heat release rate).

The Applicant has found out that hydrotalcites contribute to retard combustion of polymeric material through the formation of a carbon residue (char) on the material surface, which acts as heat and gas barrier, and through the release of steam and carbon dioxide during their decomposition. The endothermic nature of said process and the effect of dilution of combustible pyrolysis gases through steam and carbon dioxide increase the time that is necessary to reach the inflammability temperature and/or the inflammability limit of the mixture containing pyrolysis gases.

In the framework of the present invention nanodispersed hydrotalcite acts as flame retarder and the nanocomposite material containing it is flame-retarded.

Flame resistance or retard is determined by the nature of the components of the material and involves factors differing from heat resistance. Flame resistance is defined by several parameters such as: 1) ignition time, i.e. the time that is necessary for the material to start burning in the presence of a radiant source 2) flame propagation rate on the material 3) heat release rate 4) tendency to dripping.

Flame resistance is measured with a cone calorimeter, a device consisting of a cone radiating heat uniformly simulating a fire. In the presence of a radiant source the time necessary for material combustion to start is measured. The thermal decomposition of said material and the release of volatile and combustible substances begin when the material is heated. When the concentration of said combustible substances reaches the inflammability limit in the presence of an ignition source (scintillator), the combustion of said material takes place. Then the heat generated per time unit is inferred from the measurement of ignition time and of heat release, i.e. of the amount of oxygen burnt during combustion. This is the most advanced method for characterizing the parameters related to flame retard. According to the method used different results can be obtained, since the problem involving flame retard is not purely scientific.

Mechanisms involving flame retard are different from those involving heat resistance. Heat resistance or thermal stability refers to decomposition stability, relates to mechanical properties and is defined with thermogravimetric tests, which measure weight variations in a system or a compound as a function of temperature rise and define the temperature at which the material starts to degrade.

The relationship between thermal stability and flame retard depends on the chemical composition of the material. Heat resistance can sometimes be sign of flame resistance, but this is no general rule. There can be a given relationship between thermal stability and flame retard, however a flame-resistant material does not always have a high thermal stability: through thermal decomposition not only inflammable substances can be released, but also non-combustible substances. Thermal stability can sometimes involve flame retard, since no combustible volatile substances are released, which can then cause material ignition, but this is no general rule. There are materials which resist to heat but not to flame. Here are some examples thereof. Aluminum hydroxide is a material which already starts to decompose at 300°C, absorbing heat and releasing steam. The combustion of the organic matrix containing aluminum hydroxide is slowed down since the released steam reduces the concentration of gases generated by matrix combustion below the inflammability concentration of the mixture, and therefore ignition is retarded. Aluminum hydroxide is therefore a flame retarder reducing thermal stability. PVC has a low thermal stability and during decomposition generates substances which block flame development. Conversely, polycarbonate has quite a high thermal stability.

The Applicant has carried out experimental tests involving thermal analysis and combustion tests on some samples in order to show the extraordinary efficiency of nanocomposite polymeric materials comprising hydrotalcite with respect to nanocomposite polymeric materials comprising montmorillonite and with respect to microcomposite material comprising traditional flame retarders, such as aluminum hydroxide. The samples are prepared using traditional fillers, such as aluminum hydroxide and microdispersed hydrotalcite, and nanofillers, such as organically modified hydrotalcite and montmorillonite, in a concentration of 5% by weight. Hydrotalcite is modified with a compatibilizer such as para-toluenesulfonic acid (pTSA) and meta-aminobenzenesulfonic acid (ABS). Sample preparation involves dispersion of fillers and nanofillers by mechanical stirring and sonication within the epoxy monomers used. Resins are eventually reticulated with a reticulating agent with Jeffammina D230 in stoichiometric amounts with a curing cycle of 5 hours at 90°C and a post-curing cycle of 3 hours at 110°C.

The organic modification of the surface of clays promotes the incorporation into epoxy resins both for montmorillonites and for hydrotalcites.

In montmorillonites organic modification usually occurs with alkyl ammonium salts with a number of carbon atoms in the alkyl chain of 12 to 18. In particular, a primary alkyl ammonium salt with 18 to 16 carbon atoms has been used here. A primary ammonium salt has been preferred because it is reactive with the epoxy resin and promotes resin incorporation.

The incorporation process has proved to be efficient in both cases: X-ray diffraction (XRD) tests and transmission electronic microscopy (TEM) tests show a distance between the laminas of 5.6 nm and 7.6 nm, respectively, for montmorillonite and hydrotalcite in epoxy resin. Despite the greater basal distance between montmorillonite laminas, hydrotalcite has proved to be more efficient: this shows that the efficiency of flame retard is related not only to the dispersion degree of the nanofiller but also to the nature of said nanofiller.

Combustion tests show that nanocomposite polymeric materials containing modified hydrotalcite have self-extinguishing properties, in particular for materials containing an epoxy resin. It has been observed that said self-extinguishing property is more evident in the case of nanodispersed compatibilized hydrotalcite with respect to microdispersed hydrotalcite as such (combustion tests carried out with U194 HB, Horizontal Burning).

The presence of phosphoric compound and of nanocomposite material shows a synergic effect of flame-retardant properties. Said synergic effect allows to surprisingly reduce the amount of phosphoric compound and therefore the toxicity related to the gas containing phosphor, which develops during combustion. A further advantage deriving from the low phosphor content is the high improvement of the mechanical properties. Moreover, nanocomposites have a surprisingly high maximum operating temperature at which they keep their mechanical properties unchanged.

Hydrotalcites are lamellar hydroxides of mixed metals having general formula: M²⁺₍₁₋ₓ₎Mₓ³⁺(OH)₂(Aⁿ⁻)_{x/n}mH₂O.

This class of compounds has an octahedral crystalline structure similar to brucite Mg(OH)₂ - in which the partial isomorphic substitution of a bivalent metal M²⁺ with a trivalent metal M³⁺ generates residual surface charges on the crystal, which are compensated by solvated anions. Thanks to this structure hydrotalcites are anionic exchangers, similarly to some lamellar clays (silicoaluminates - e.g. montmorillonites), in which the negative charges of the lamellas are counterbalanced by exchangeable positive charges. Compounds belonging to the class of hydrotalcites are also known as anionic clays. Like cationic clays hydrotalcites can be modified with incorporated organic ions, i.e. introduced between the lamellas and used as nanofillers for the synthesis of nanocomposites.

In order to promote nanometric dispersion of lamellar particles, the pre-existing anions can be replaced by ionic exchange with other organic ions, thus making the crystal surface lipophile and therefore compatible with the polymeric matrix into which the lamellar particles are incorporated.

In a preferred embodiment of the present invention hydrotalcite modified on its surface with a compatibilizer is used. For instance, said hydrotalcite can be synthetic hydrotalcite (Mg₄Al₂(CO₃) (OH)₁₂ 3H₂O)_{0.5}, average particle size 2.26 micrometers and surface area 17 m²/g.

Preferably, an organic acid is used as compatibilizer, for instance an organic acid chosen from the group comprising: para-toluenesulfonic acid (pTSA), para-hydroxybenzenesulfonic acid (IBS), meta-aminobenzenesulfonic acid (ABS), stearic acid (SA) or oleic acid, dodecylbenzenesulfonate, dodecylsulfate.

Advantageously, para-toluenesulfonic acid (pTSA) and/or meta-aminobenzenesulfonic acid (ABS) are used as compatibilizer.

Hydrotalcite modified on its surface with a compatibilizer is incorporated into a polymeric matrix.

In a preferred embodiment of the present invention the polymeric matrix is chosen among thermosetting polymers.

Preferably, thermosetting polymers are chosen from the group comprising: epoxy resins, polyesters, vinyl esters, phenol resins.

Advantageously, as thermosetting polymer an epoxy resin DER 331 - Dow Chemical - (DGEBA) can be used, having an equivalent epoxide weight 182.0-192.0 ASTM D1652-90, average molecular weight below or equal to 700, viscosity at 25°C 11000-14000 (cPs) ASTM D445-94. The epoxy resin is reticulated with reticulating agent Jeffammina D230 (amino-terminated polyoxypropylene dienes) with an average molecular weight of 230.

In another preferred embodiment of the present invention the polymeric matrix is chosen among thermoplastic polymers.

Preferably, thermoplastic polymers are chosen from the group comprising: polypropylene, polyethylene, polyethylene terephthalate.

Moreover, a phosphoric compound is used as flame retarder.

The phosphoric compound is preferably chosen from the group comprising organophosphoric compounds, elementary phosphor, red phosphor, ammonium polyphosphate, diammonium phosphate.

Advantageously, as phosphoric compound ammonium polyphosphate is used, for instance ammonium polyphosphate (APP), EXOLIT AP422, produced by Clariant EXOLIT AP 422.

The nanocomposite polymeric material according to the present invention has the following composition expressed as percentage weight on the total weight of the nanocomposite polymeric material.

For instance, the polymeric matrix is between 50 and 99% on the total weight of the nanocomposite polymeric material.

For instance, hydrotalcite is between 1 and 30% on the total weight of the nanocomposite polymeric material.

For instance, the phosphoric compound is between 0 and 35% on the total weight of the nanocomposite polymeric material; preferably below 30% by weight; still more preferably below 20% by weight.

An object of the present invention also relates to a process for preparing a nanocomposite polymeric material comprising a polymeric matrix, hydrotalcite and phosphoric compounds. Said process is characterized in that it comprises a step in which the phosphoric compound is added.

For instance, in a first embodiment with thermosetting polymers the process comprises a step in which;
a) hydrotalcite is modified on its surface with a compatibilizer;
b) the modified hydrotalcite is dispersed in a polymeric matrix;
c) the polymeric matrix - dispersed hydrotalcite is heated by mechanical stirring so as to obtain a swelling effect;
d) a reticulating agent is added; and
e) the phosphoric compound is dispersed.

Moreover, the process comprises a step in which the material is poured into molds and cured with a thermal cycle.

For instance, in a second embodiment with thermoplastic polymers the process comprises a step in which:
a) hydrotalcite is modified on its surface with a compatibilizer;
b) hydrotalcite and phosphoric compound are dispersed directly into the extruder.

The step described above at c) is a preferred step.

The phosphoric compound is added after step b) or, alternatively, after step c).

Preferably, hydrotalcite is dispersed in the monomer in a concentration in the range between 1 and 30% by weight; heating takes place at a temperature between room temperature and 80°C for a time in the range between 1 and 24 hours and at a temperature in the range between 80 and 180°C for a time in the range between 5 and 8 hours. The phosphoric compound is dispersed by mechanical stirring for a time between 1 minute and 30 minutes at room temperature or by heating at a temperature related directly to resin viscosity, generally 50°C. The curing with thermal cycle takes place at a temperature in the range between 20 and 120°C for a time in the range between 2 and 24 hours and a temperature in the range between 80 and 160°C for a time in the range between 1 and 5 hours.

More preferably, hydrotalcite is dispersed in a liquid monomer in a concentration in the range between 1 and 10% by weight.

Heating takes place at a temperature in the range between 60 and 120°C for a time in the range between 2 and 12 hours and at a temperature in the range between 100 and 160°C for a time in the range between 1 and 3 hours. For instance, the phosphoric compound can be added in 10 minutes at 50°C; the curing with thermal cycle takes place at a temperature in the range between 50 and 80°C for a time in the range between 3 and 7 hours and at a temperature in the range between 100 and 130°C for a time in the range between 2 and 3 hours.

Still more preferably, hydrotalcite is dispersed in the monomer in a concentration between 4 and 8% by weight; heating takes place at a temperature of about 70-90°C, preferably 80°C, for a time between 1 and 3 hours and at a temperature between 90 and 130°C, preferably 120°C, for a time of about 2 hours; the curing with thermal cycle takes place at a temperature of about 40-60°C, preferably 50°C, for a time between 4 and 6 hours, preferably 5 hours, and a temperature between 90 and 120°C, preferably 110°C, for a time of about 1-3 hours, preferably 2 hours.

In a preferred embodiment the hydrotalcite used is of type MG61HT (ratio Mg/Al=2, carbonated form), compatibilized with meta-aminobenzenesulfonic acid and dispersed in epoxy resin 4% by weight.

Heating by mechanical stirring takes place at 80°C for 2 hours and 120°C for 2 hours, the reticulating agent added is Jeffammina D230 in an amount of 30 phr (30% of the weight of the resin used), the phosphoric compound is ammonium polyphosphate in an amount of 20%. The curing with thermal cycle is carried out for 5 hours at 50°C and 2 hours 110°C.

The flame-retardant nanocomposite material according to the present invention is particularly suitable for a wide range of applications. The material according to the present invention has good mechanical properties. From the nanocomposite material according to the present invention various items can be obtained. Examples thereof comprise any application requiring flame-resistant materials. In particular, the flame-retardant nanocomposite material according to the present invention can be used in the field of transport, telecommunications, constructions, electric appliances.

The flame-retardant nanocomposite material comprising hydrotalcite and polymeric matrix can be used as material for structural and non-structural components in means of transport, insulating systems in environments with high fire danger such as electric power stations, coatings for electric cables and optical fibers.

### Tests with cone calorimeter

In order to verify the efficiency of flame retard of nanocomposite samples, tests have been carried out with a cone calorimeter according to specification ASTM E 1354-97 using thermosetting matrixes and thermoplastic matrixes. Nanocomposites based on hydrotalcite are compared with nanocomposites based on montmorillonite and with non-halogenated flame retarders based on ammonium polyphosphate.

### Preparation of samples

Three samples for each type of material are prepared, with size 100x100x8 mm³. 5 types of material have been chosen:
1. Epoxy resin DER 331 (DGEBA) reticulated with 30 phr of reticulating agent Jeffammina D230 (amino-terminated polyoxypropylene dienes).
2. Epoxy resin DER 331 reticulated with Jeffammina D230 and with 5% by weight of Dellite AP produced by Laviosa (montmorillonite modified with industrial primary ammonium salt C16-C18).
3. Epoxy resin DER 331 reticulated with Jeffammina D230 and with 5% by weight of EXOLIT AP422, ammonium polyphosphate (APP) produced by Clariant.
4. Epoxy resin DER 331 reticulated with Jeffammina D230 and with 5% by weight of hydrotalcite modified with p-toluenesulfonate (MG61/pTS).
5. Epoxy resin DER 331 reticulated with Jeffammina D230 and with 5% by weight of hydrotalcite modified with aminobenzenesulfonate (MG61/ABS).

The dispersion of ammonium polyphosphate (APP) takes place by simple mechanical stirring at 50°C for 10 minutes. Nanocomposite samples undergo a hot dispersion treatment known as swelling, which is carried out by rapidly stirring (about 400 rpm) at a temperature of 80°C for 12 hours and 120°C for 2 hours. In particular, for hydrotalcite modified with pTS, acetone is used as solvent because of the low compatibility of the filler with the resin. All samples undergo the same curing cycle: 5 hours at 50°C and 2 hours at 110°C. The low initial temperature ensures a slow reticulation and a great reduction of the resin viscosity at the same time; said features promote the incorporation of the nanocomposites.

### Nanostructure of samples

Samples of series 2, 4 and 5 are nanocomposite samples.

Samples of series 2 do not have diffraction peaks from XRD analysis, whereas TEM tests show an inter-lamellar distance of about 7.6 nm.

Samples of series 4 have an incorporated structure with a basal distance of 2.4 nm as shown by XRD test.

Samples of series 5 have an inter-lamellar distance of 5.6 nm (XRD and TEM tests).

### Analysis of results of tests with cone calorimeter

The characteristic developments of the curves of heat release rate (HRR) of the 5 types of materials under test have been measured experimentally. Table 1 contains relevant data for each of said 15 samples (3 samples for each of the 5 materials) with average values (x) and standard deviations (σ) concerning 2 samples of the same material, and the percentage variations (Δ) of the average values with respect to the resin as such without filler.

### Weight loss

From the weight loss shown in Table 1 it can be easily inferred how surprisingly efficient ammonium polyphosphate (APP) is; the average weight loss is of about 9.9%, i.e. lower than the other samples. The weight loss of nanocomposite samples is around 90%, i.e. there are residue increases of 5% for Dellite ammonium polyphosphate (DelAP) and MG61/pTS and of 6% for MG61/ABS. Considering that about 40% of the nanofiller weight corresponds to the compatibilizer, it is possible to observe a tendency to rise of the carbon residue of the matrix. In particular, hydrotalcite is more efficient than montmorillonite in promoting char formation, since it undergoes a weight loss of 40% of brucite layers; whereas among the two hydrotalcites under test MG61/ABS gives rise to a higher carbonization.

### Peak of heat release (PHHR)

Also in this case ammonium polyphosphate (APP) has given the best results with a reduction of 62% of the peak at 449 with respect to pure resin, peak at 1181. However, MG61/ABS, peak at 584, has a high reduction of 51%. Moreover, there is an advantage related to the use of nanocomposite hydrotalcite, which is evident by comparing the reduction of the peak with montmorillonite at 861.5, corresponding to 27%. It is further interesting to point out that the use of MG61/ABS enables to obtain a profile of the curve of heat release rate (HRR) differing from the one of the other nanocomposites; as a matter of fact, the peak is reached immediately after ignition and no increase of the heat release rate can be observed in the other samples. The different profile seems to be related to the formation of a resistant refractory swelling structure. The resistance of char is similar for MG61/ABS and MG61/pTS, but in the first case the swelling effect is more evident, probably due to the presence of nitrogen in the compatibilizer and to the subsequent release of gaseous ammonia.

### Heat release rate

The efficiency scale among the various samples is the same, but the percentage reductions of heat release rate are lower.

### Specific extinction area

The variations of fume opacity are low among the various samples, although only montmorillonite shows a slight increase of opacity (+3.2%) with respect to pure resin.

### Ignition time

The use of ammonium polyphosphate (APP) reduces thermal stability and therefore ignition time of 29%. Ignition times are unchanged for Dellite ammonium polyphosphate (DelAP), are lower for MG61/pTS (10%) and are slightly higher for MG61/ABS (2.7%). Such differences are due to the nature of the compatibilizer used. In case of MG61/ABS (aminobenzenesulfonate) and of Dellite ammonium polyphosphate (DelAP, primary ammonium salt) the compatibilizer reacts with the epoxy groups forming one reticulated structure with the resin; conversely, in MG61/pTS the decomposition of the compatibilizer and the subsequent release of combustible gases causes the anticipated combustion of the material.

### Combustion time

In this case an extremely different behavior can be observed in ammonium polyphosphate (APP) and nanocomposites, since the mechanisms of flame retard are quite different. Combustion time gets smaller for ammonium polyphosphate (APP) thanks to the formation of a carbon layer that protects the substrate from irradiated heat. In the other cases the samples burn out completely, but the barrier effect related to the intrinsic permeability to permeating gases of the clays used reduces combustion rate and increases combustion time. As a consequence, the greater combustion time is, the greater the efficiency of the nanofiller is.

The excellent behavior of ammonium polyphosphate (APP) is related to the swelling effect: the expansion ratio (structure thickness after swelling to initial thickness) is of about 40. The carbon foam thus generated suffocates the flame and prevents combustion in the underlying resin. However, it should be pointed out that the char produced has poor mechanical properties and a low adhesion to the substrate; therefore, the results obtained with the cone calorimeter are also due to the fact that the samples are arranged horizontally and the char lies on said samples. As a matter of fact, should a sample be turned upside down at the end of the test, the char comes off completely leaving the underlying resin uncovered and thus enabling combustion to go on. In order to understand the relevance of this phenomenon it should be considered that for vertical combustion tests type UL94 VB the necessary concentration of ammonium polyphosphate (APP) is of 30% by weight (for the same resin and reticulating agent DER331 Jeffammina). Concentrations of 5% by weight like those used for cone calorimeter tests are insufficient and a tendency to dripping or char detachment can be observed. Moreover, said tendency to dripping is certainly more relevant in a thermoplastic polymer with respect to a thermosetting one. One of the properties of nanocomposites is to reduce the tendency to dripping by increasing the viscosity of the melted product. That is why the use of a synergic system hydrotalcite - ammonium polyphosphate (APP) is advantageous in UL94VB tests in particular for thermoplastic matrixes.

### UL94 combustion tests

A set of tests has been carried out in order to find the minimum concentration of APP that is necessary to obtain a material V0 (UL94 standard) in epoxy resin (der331): said concentration has been found to be of 30%. Curing conditions were 5 hours at 50°C and 2 hours at 110°C. By way of comparison a set of samples containing 4% by weight of MG61/ABS has been prepared in order to find the minimum concentration of APP that is necessary to obtain a material V0: concentration 20%. Therefore, the use of nanocomposite hydrotalcite (4%) enables to reduce the concentration of ammonium polyphosphate (APP) that is necessary to achieve a classification V0 from 30% to 20% by weight.

**TABLE 1**

| | | **Weight loss** | | **Heat release peak** | | **Heat release rate** | | **Specific extinction area** | | **Ignition time** | | **Combustion time** | |
|---|---|---|---|---|---|---|---|---|---|---|---|---|---|
| | | | x,σ,Δ | | x,σ,Δ | | x,σ,Δ | | x,σ,Δ | | x,σ,Δ | | x,σ,Δ |
| **Material 1** | 1 | 97.4 | 96.7 | 11.90.8 | 1181.4 | 550.6 | 533.1 | 761.2 | 748.9 | 116 | 109 | 499 | 478 |
| | 2 | 96.7 | 0.7 | 1282.8 | 106.4 | 528.6 | 15.7 | 721.1 | 24.1 | 94 | 13 | 470 | 18.4 |
| | 3 | 96.0 | - | 1070.7 | - | 520.1 | - | 764.3 | - | 117 | - | 465 | - |
| **Material 2** | 1 | 91.6 | 91.4 | 867.8 | 861.5 | 490.2 | 476.7 | 769.5 | 772.8 | 116 | 110 | 493 | 488 |
| | 2 | 91.6 | 0.3 | 915.3 | 57.2 | 492.9 | 25.8 | 779.5 | 5.9 | 105 | 5.6 | 485 | 4.2 |
| | 3 | 91.1 | 5.3 | 801.4 | 27.1 | 446.9 | 10.6 | 769.3 | +3.2 | 109 | +0.1 | 487 | +2.0 |
| **Material 3** | 1 | 91.2 | 91.6 | 764.5 | 714.9 | 397.2 | 382.3 | 723.0 | 724.2 | 96 | 97.7 | 573 | 585.7 |
| | 2 | 92.0 | 0.4 | 659.5 | 52.7 | 395.5 | 24.4 | 755.2 | 30.4 | 99 | 1.5 | 583 | 14.2 |
| | 3 | 91.6 | 5.1 | 720.6 | 39.5 | 354.1 | 28.3 | 694.4 | -3.3 | 98 | -10.4 | 601 | +22.5 |
| **Material 4** | 1 | 91.1 | 90.5 | 582.2 | 584.1 | 337.7 | 346.9 | 723.0 | 743.0 | 119 | 112 | 690 | 640.3 |
| | 2 | 90.5 | 0.6 | 577.5 | 7.8 | 343.4 | 11.3 | 767.7 | 22.7 | 111 | 6.6 | 645 | 52.2 |
| | 3 | 90.0 | 6.2 | 592.7 | 50.6 | 395.5 | 34.9 | 738.4 | -0.8 | 106 | +2.7 | 586 | +33.9 |
| **Material 5** | 1 | 9.7 | 9.9 | 491.2 | 449.0 | 92.8 | 104.8 | 712.2 | 719.6 | 85 | 77.7 | 186 | 199.7 |
| | 2 | 6.4 | 3.6 | 240.3 | 191.1 | 91.7 | 21.7 | 777.0 | 15.7 | 85 | 12.7 | 189 | 21.1 |
| | 3 | 13.6 | 86.8 | 615.5 | 62.0 | 129.8 | 80.3 | 54.0 | -3.9 | 63 | -28.7 | 224 | -58.2 |

## Claims

1. Nanocomposite polymeric material comprising a polymeric matrix, a surface modified hydrotalcite and a phosphoric compound, **characterized in that**:
- said hydrotalcite is modified on its surface with a compatibilizer organic acid;
and
- said phosphoric compound is chosen from ammonium polyphosphate or diammonium phosphate.

2. The material according to claim 1, in which said polymeric matrix is a thermosetting polymer.

3. The material according to claim 2, in which said thermosetting polymer is chosen from the group comprising: epoxy resins, polyesters, vinyl esters or phenol resins.

4. The material according to claim 1, in which said polymeric matrix is a thermoplastic polymer.

5. The material according to claim 4, in which said thermoplastic polymer is chosen from the group comprising: polypropylene, polyethylene, polyethylene terephthalate.

6. The material according to claim 1, in which said organic acid is chosen from the group comprising: p-toluenesulfonic acid (pTSA), para-hydroxybenzenesulfonic acid (IBS), meta-aminobenzenesulfonic acid (ABS), stearic acid or oleic acid.

7. The material according to claim 1, in which said phosphoric compound is ammonium polyphosphate.

8. The material according to anyone of claims from 1 to 7, in which said nanocomposite polymeric material has the following composition, expressed as percentage weight on the total weight of the material:
polymeric matrix, between 50 and 99% by weight;
hydrotalcite, between 1 and 30% by weight;
phosphoric compound, below 30% by weight.

9. The material according to claim 8, in which said phosphoric compound is below 20% by weight.

10. A process for preparing a flame-retarded nanocomposite polymeric material, in which:
a) hydrotalcite is modified on its surface with a compatibilizer, said compatibilizer being an organic acid;
b) said modified hydrotalcite is dispersed in said polymeric matrix;
c) the mixture polymeric matrix-dispersed hydrotalcite from step b) is heated under mechanical stirring so as to obtain a swelling effect;
d) a reticulating agent is added;
e) said phosphoric compound is dispersed into the mixture from step d).

11. The process of claim 10, further comprising pouring the final material from step e) into molds and curing it with a thermal cycle.

12. The process according to claims 10 and 11, in which said phosphoric compound is added after step b) or after step c).

13. Use of at least one of the nanocomposite polymeric materials according to anyone of claims from 1 to 9, for preparing manufactured items with flame-retardant properties.

## Revendications

1. Matériel polymère nanocomposite comprenant une matrice polymère, un hydrotalcite modifié en surface et un composé phosphorique, **caractérisé en ce que**:
- l'hydrotalcite est modifié en surface avec un acide organique compatibilisateur; et
- le composé phosphorique est choisi entre polyphosphate d'ammonium ou phosphate de diammonium.

2. Matériel selon la revendication 1, où ladite matrice polymère est un polymère thermodurcissable.

3. Matériel selon la revendication 2, où ledit polymère thermodurcissable est choisi dans le groupe comprenant: résines époxydes, polyesters, esters de vinyle ou résines phénoliques.

4. Matériel selon la revendication 1, où ladite matrice polymère est un polymère thermoplastique.

5. Matériel selon la revendication 4, où ledit polymère thermoplastique est choisi dans le groupe comprenant: polypropylène, polyéthylène, polyéthylène téréphtalate.

6. Matériel selon la revendication 1, où ledit acide organique est choisi dans le groupe comprenant: acide p-toluènesulfonique (pTSA), acide para-hydroxybenzènesulfonique (IBS), acide meta-aminobenzènesulfonique (ABS), acide stéarique ou acide oléique.

7. Matériel selon la revendication 1, où ledit composé phosphorique est polyphosphate d'ammonium.

8. Matériel selon l'une quelconque des revendications 1 à 7, où ledit matériel polymère nanocomposite a la composition suivante, en pourcentage en poids sur le poids total du matériel:
matrice polymère 50 à 99% en poids;
hydrotalcite 1 à 30% en poids;
composé phosphorique moins de 30% en poids.

9. Matériel selon la revendication 8, où ledit composé phosphorique est moins de 20% en poids.

10. Procédé pour la préparation d'un matériel polymère nanocomposite retardé à la flamme, où:
a) l'hydrotalcite est modifié en surface avec un compatibilisateur, ledit compatibilisateur étant un acide organique;
b) l'hydrotalcite modifié est dispersé dans la matrice polymère;
c) le mélange de matrice polymère et hydrotalcite dispersé de l'étape b) est chauffé sous agitation mécanique afin d'obtenir un effet de regonflement;
d) un agent de réticulation est ajouté;
e) le composé phosphorique est dispersé dans le mélange de l'étape d).

11. Procédé selon la revendication 10, comprenant en plus l'étape de verser le matériel final de l'étape e) dans des moules et de le durcir avec un cycle thermique.

12. Procédé selon les revendications 10 et 11, où ledit composé phosphorique est ajouté après l'étape b) ou après l'étape c).

13. Utilisation d'au moins un des matériaux polymères nanocomposites selon l'une quelconque des revendications 1 à 9 pour la fabrication de produits manufacturés avec des propriété ignifugeantes.

## Patentansprüche

1. Nanokomposit-Polymermaterial umfassend eine Polymermatrix, einen oberflächenmodifizierten Hydrotalcit und eine Phosphorverbindung, **dadurch gekennzeichnet, daß**:
- der Hydrotalcit an dessen Oberfläche mit einer verträglichkeitsmachenden organischen Säure (Compatibilizer) modifiziert wird; und
- die Phosphorverbindung aus Ammoniumpolyphosphat und Diammoniumphosphat ausgewählt ist.

2. Material nach Anspruch 1, worin die Polymermatrix ein wärmehärtendes Polymer ist.

3. Material nach Anspruch 2, worin das wärmehärtende Polymer aus der Gruppe umfassend: Epoxyharze, Polyester, Vinylester und Phenolharze ausgewählt ist.

4. Material nach Anspruch 1, worin die Polymermatrix ein thermoplastisches Polymer ist.

5. Material nach Anspruch 4, worin das thermoplastische Polymer aus der Gruppe umfassend: Polypropylen, Polyethylen, Polyethylenterephtalat ausgewählt ist.

6. Material nach Anspruch 1, worin die organische Säure aus der Gruppe umfassend: p-Toluensulfonsäure (pTSA), Para-Hydroxybenzolsulfonsäure (IBS), Meta-Aminobenzolsulfonsäure (ABS), Stearinsäure oder Ölsäure ausgewählt ist.

7. Material nach Anspruch 1, worin die Phosphorverbindung Ammoniumpolyphosphat ist.

8. Material nach irgendeinem der Ansprüche 1 bis 7, worin das Nanokomposit-Polymermaterial die folgende Zusammensetzung als % Gew. bezogen auf dem Gesamtgewicht des Materials aufweist:
Polymermatrix 50 bis 99% Gew.;
Hydrotalcit 1 bis 30% Gew.;
Phosphorverbindung weniger als 30% Gew.

9. Material nach Anspruch 8, worin die Phosphorverbindung bei weniger als 20% Gew. liegt.

10. Verfahren zur Herstellung eines flammenverzögerten Nanokomposit-Polymermaterials, worin:
a) der Hydrotalcit an dessen Oberfläche mit einem Verträglichkeitsmacher (Compatibilizer) modifiziert wird, wobei der Compatibilizer eine organische Säure ist;
b) der modifizierte Hydrotalcit in die Polymermatrix dispergiert wird;
c) die Mischung von Polymermatrix und dispergiertem Hydrotalcit aus Schritt b) unter mechanischem Rühren erhitzt wird, um eine Schwellungswirkung zu erhalten;
d) ein Vernetzungsmittel zugegeben wird;
e) die Phosphorverbindung in die Mischung aus Schritt d) dispergiert wird.

11. Verfahren nach Anspruch 10, umfassend ferner einen Schritt, worin das Endmaterial aus Schritt e) in eine Form eingegossen wird und mit einer Temperatur-Zeit-Folge ausgehärtet wird.

12. Verfahren nach Ansprüchen 10 und 11, worin die Phosphorverbindung nach Schritt b) oder nach Schritt c) zugegeben wird.

13. Verwendung von mindestens einem der Nanokomposit-Polymermaterialien nach irgendeinem der Ansprüche 1 bis 9 zur Herstellung von handgefertigten Erzeugnissen mit flammhemmenden Eigenschaften.
